# EUROPEAN PATENT APPLICATION

(11) **EP 3 670 586 A1**
(43) Date of publication of application: **24.06.2020**
(21) Application number: 18214797.5
(22) Date of filing: 20.12.2018
(51) Int. Cl.: C08J 9/18

(54) **MICRO, SUB-MICRON, AND/OR NANO-CELLULAR FOAMS BASED ON SILOXANE CONTAINING (CO)POLYMERS AND BLENDS**

(71) Applicant: SABIC Global Technologies B.V., 4612 PX Bergen op Zoom (NL)
(72) Inventor: HAGENAARS, Arno, 4612 PX Bergen op Zoom (NL); GOOSSENS, Johannes Gerardus Petrus, 4612 PX Bergen op Zoom (NL); VAN ES, Martin, 4612 PX Bergen op Zoom (NL)
(74) Representative: J A Kemp LLP

(57) **Abstract**

This disclosure describes micro-, sub-micron, and nano-cellular polymer foams formed from siloxane containing (co)polymers and blends, and systems and methods of formation thereof. The micro, sub-micron, and nano-cellular polymer foam has a density of less than or equal to 300 kg/m³.

## Description

### FIELD OF INVENTION

The present disclosure relates generally to polymer foams, and, but not by way of limitation, to methods and systems for producing polymer foams, such as a polymer foam formed from beads.

### BACKGROUND

Microcellular foams are defined as having an average cell size between 1 and 50 microns. Microcellular foams typically have property benefits over regular foams. For instance, microcellular foaming has enabled weight reduction (10-30%) with minimal decrease in mechanical strength, over regular foams. Due to a reduced cell size, microcellular foams have lower crack propagation properties, while the impact properties and toughness are increased as compared to large cellular foams (e.g., foams having cell sizes greater than 50 microns). Nano-cellular foams with cell sizes of 100 nm or less possess unique thermal conductivity, optical, or mechanical properties over microcellular foams. However, cell walls and cell struts of micro- and nano-cellular foams are extremely thin and, especially during their formation in a foaming process (e.g., extrusion or injection foaming), have a tendency to collapse and limit reaching a low foam cell (pore) density and increase density/weight of the foam. In addition, micro- and nano-cellular foams tend to have relatively high densities, such as densities greater than 300 kg/m³.

Nano-cellular foams made from polymer materials can achieve extremely small cells (e.g., less than 20 nm) when using solid-state foaming which involves the use of a supercritical fluid which utilizes high pressures that require increased caution and expensive pressure vessels. However, nano-cellular polymer foams with such small cell sizes have relatively high densities (e.g., densities greater than 300 kg/m³) and are limited to thin and small part geometries. Additionally, solid-state foaming is less suitable for industrial scale production. For example, saturation of a single piece of polymer more than a few millimeters thick can take hours or days. Furthermore, solid-state and extrusion foaming can be limited in their application and are typically used to produce smaller parts, such as parts 50 mm in size and only a few mm thick.

### SUMMARY

The present disclosure describes micro- and/or nano-cellular polymer bead foams, and methods, devices, and systems to form micro- and/or nano-cellular polymer bead foams. The polymer bead foams described herein are often referred to herein as micro- and nano-cellular polymer foams and include/encompass micro-cellular foams, sub-microcellular foams, nano-cellular foams, and hybrid foams having micro-, sub-micro-, and/or nano-sized cells. As used herein micro-cellular foams includes foams having an average pore (cell) size of 1 to 100 microns, sub-microcellular foams includes foams having an average pore (cell) size of 0.5 to 1 microns, and nano-cellular foams includes foams having an average pore (cell) size of 10 to 500 nanometers. The micro- and nano-cellular polymer bead foams described herein include a siloxane based copolymer and have a density of less than or equal to 300 kg/m³. In some implementations, micro- and nano-cellular polymer bead foams described herein include siloxane based copolymers and have a density of less than or equal to 200 kg/m³. In a particular implementation, the siloxane based copolymer is a polycarbonate-siloxane block copolymer. In some implementations, the microcellular polymer foam may have a cell density of between substantially 10E9 and 10E12 cells per cubic centimeter, and the nano-cellular polymer foam may have a cell density of greater than substantially 10E15 cells per cubic centimeter. Additionally, or alternatively, the micro- and nano-cellular polymer foams can achieve a relative density of about 0.15. Thus, each of the micro- and nano-cellular polymer foams described herein have reduced density and thus provide a weight savings when incorporated or formed into other parts or components.

Additionally, the methods, systems, and devices described herein for producing the micro- and nano-cellular polymer foams have additional benefits over conventional foaming and forming methods. The micro- and nano-cellular polymer foams described herein can be formed using foamed beads generated by a bead foaming process, such as a pressure vessel bead foaming process. One example of such a pressure vessel bead foaming process is an autoclave bead foaming process. Bead foaming, which can produce low-density foam products with complex three-dimensional geometries, is an alternative foaming process to solid-state, extrusion, and foam injection molding. In bead foaming manufacturing, low-density foam beads (a.k.a., foamed beads) are molded into a final foam product shape. Pressure vessel bead foaming can be scaled up to or employed in industrial scale processes, and thus offers improved commercialization and adoption in a wider range of products. Furthermore, micro- and nano-cellular polymer bead foams can be manufactured to produce a wider range of part shapes and sizes, as compared to other foaming techniques. To illustrate, bead foams (as compared to solid-state foams, extruded foams, and injection-molded foams) can achieve more complex part geometries and have a higher degree of dimensional accuracy. Using siloxane based copolymers and the methods described herein, the production of nano-cellular polymer foams is possible with pressure vessel bead foaming, such as autoclave bead foaming. In some implementations, the pressure vessel bead foaming process described herein can generate homogeneous beads without a solid skin and/or with cell sizes in the range of 2 to 25 microns. Additionally, the micro- and nano-cellular polymer foams made by the methods, systems, and/or devices described herein have a reduced density as compared to micro- and nano-cellular polymer foams made by other methods (e.g., extrusion, foam injection molding, and solid-state foaming), systems, or devices.

Thus, the present disclosure describes micro- and nano-cellular polymer foams with reduced density (improved pore density) and reduced weight. The present disclosure further describes methods, systems, and devices for producing the micro- and nano-cellular polymer foams more quickly, on industrial scale, and with complex part geometries having high dimensional accuracy. Therefore, the polymer foam, methods, systems, and devices described herein enable products to be made lighter, smaller, less expensive, and more quickly as compared to conventional micro- and nano-cellular foams and methods.

The methods and foams described herein may advantageously have an increased pore density and reduced foam density while retaining micro- and/or nano-cellular pore sizes. One particular product that can benefit from such micro- and nano-cellular polymer foams is thermal insulation. Other particular products that can benefit from such a micro- and nano-cellular polymer foams structure are membranes and filters. Accordingly, the present disclosure overcomes the existing challenges of reducing density of micro- and nano-cellular foams and improved methods of manufacturing micro- and nano-cellular foams.

The polymer foams disclosed herein may be open cell or closed cell. As disclosed herein, the term "cell" is defined as a void cavity that makes up the foam. The cells may comprise an "open cell structure", a "closed cell structure", or combinations thereof. An "open cell structure" is defined as a void cavity that is open at one or more sides. Open cell structures may connect to other open or closed cell structures. A "closed cell structure" is defined as a void cavity with no opening. A closed cell structure may or may not be present on the surface of a polymer foam. If present, the skin of the closed cells may form a part of the foam surface.

An average pore (cell) size of the polymer foams described herein can be determined by cryo-fracturing a foam part to generate a sample. To illustrate, the foam part is quickly frozen with liquid nitrogen or another freezing agent and is broken with a sharp blow to generate the sample. A representative portion (e.g., an area having dimensions between 2 microns by 2 microns and 10 microns by 10 microns) of a cross-section of the sample is analyzed by an electron microscope (e.g., a scanning electron microscope (SEM)) to determine a maximum transverse dimension and a minimum transverse dimension for a number of random pores (e.g., 50-200) of the sample. To illustrate, the maximum and minimum pore widths are determined for 100 pores, which are randomly selected or pseudo-randomly selected from a 5 micron by 5 micron section of the sample, to generate the average pore size value for the sample and the foam part.

Some embodiments of the present polymer foams comprise: a siloxane based copolymer, where the polymer foam has a density of less than or equal to 300 kg/m³. In some implementations, the polymer foam comprises a bead foam, and the polymer foam has an average pore size of 10 nm to 20 microns, a relative density of between 0.15 and 0.3, or both.

In some of the forgoing embodiments, the polymer foams comprise a nano-cellular polymer foam and have a cell density of greater than or equal to 10E15 cells per cubic centimeter and an average cell size of 10 nm to 500 nm. In other implementation, the polymer foams comprise a sub-micron cellular polymer foam and have a cell density between 10E12 and 10E15 cells per cubic centimeter and an average cell size of 0.5 microns to 1 micron. Alternatively, polymer foams comprise a micro-cellular polymer foam and have a cell density between 10E9 and 10E15 cells per cubic centimeter and an average cell size of 1 micron to 20 microns.

In some of the forgoing embodiments of the polymer foams, the siloxane based copolymer includes siloxane between 0.1 and 25 weight percent, and the siloxane based copolymer includes a polycarbonate-siloxane copolymer, a polyphenylene ether-siloxane copolymer, a polyetherimide-siloxane copolymer, or a combination thereof. In some implementations, the polycarbonate-siloxane copolymer includes a polysiloxane block copolymer comprising a first block and a second block, the first block comprises a polysiloxane block, the second block comprises a polycarbonate or a polycarbonate blend, the second block does not contain a polysiloxane, and the polysiloxane block has 5 to 90 repeat units.

In some of the forgoing embodiments, the polymer foams have a density of less than 200 kg/m³, where cells of the polymer foams comprise an open cell structure, a closed cell structure, or a combination thereof, and where the polymer foams are made using a solid-state process or a bead foaming process.

Some embodiments of the present methods of forming polymer bead foam comprise: saturating pellets with a blowing agent to form saturated pellets, the pellets including a siloxane based copolymer; and forming foamed beads based on the saturated pellets, the foamed beads have a density of less than 300 kg/m³. In some implementations, saturating the pellets comprises: combining, at a pressure vessel, the pellets, one or more additives, and the blowing agent to form a mixture; and applying, by the pressure vessel, heat, pressure, or both, to the mixture to form the saturated pellets, and forming the foamed beads comprises depressurizing the saturated pellets and heat treating the saturated pellets in a hot liquid bath, where, during forming the foamed beads, the blowing agent induces nucleation and expansion in the saturated pellets to form the foamed beads.

In some of the foregoing embodiments of the present methods, for micro-cellular polymer foam formation, saturating the pellets is performed at a temperature higher than a glass transition temperature (Tg) of the siloxane based copolymer or a melting temperature (Tm) of the siloxane based copolymer. Alternatively, for nano-cellular polymer foam formation, saturating the pellets is performed at a temperature lower than a glass transition temperature (Tg) of the siloxane based copolymer when the siloxane based copolymer is amorphous, or at a temperature lower than a melting temperature (Tm) when the siloxane based copolymer is semi-crystalline.

In some of the foregoing embodiments of the present methods, the blowing agent comprises carbon dioxide, oil is used as a dispersion medium in the pressure vessel, and the foamed beads are homogeneous, have cell sizes between 10 nanometers and 20 microns, and do not have a solid skin. In some of the foregoing embodiments, the present methods further comprise: combining, at an extrusion device, a siloxane based resin and one or more additives to form a siloxane based copolymer composition; and forming, by a granulator, the siloxane based copolymer composition into the pellets, wherein the pellets have an average length of between 0.8 and 1.2 mm and an average diameter of between 1 and 1.6 mm. In some of the foregoing embodiments of the present methods, a polymer foam. Some embodiments of the present polymer foams are formed by the foregoing embodiments of the present methods.

As used herein, various terminologies are for the purpose of describing particular implementations only and is not intended to be limiting of implementations. For example, as used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). The term "coupled" is defined as connected, although not necessarily directly, and not necessarily mechanically; two items that are "coupled" may be unitary with each other. The terms "a" and "an" are defined as one or more unless this disclosure explicitly requires otherwise.

The term "about" as used herein can allow for a degree of variability in a value or range, for example, within 10%, within 5%, or within 1% of a stated value or of a stated limit of a range, and includes the exact stated value or range. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed implementation, the term "substantially" may be substituted with "within [a percentage] of' what is specified, where the percentage includes .1, 1, or 5 percent; and the term "approximately" may be substituted with "within 10 percent of' what is specified. The statement "substantially X to Y" has the same meaning as "substantially X to substantially Y," unless indicated otherwise. Likewise, the statement "substantially X, Y, or substantially Z" has the same meaning as "substantially X, substantially Y, or substantially Z," unless indicated otherwise. The phrase "and/or" means and or. To illustrate, A, B, and/or C includes: A alone, B alone, C alone, a combination of A and B, a combination of A and C, a combination of B and C, or a combination of A, B, and C. In other words, "and/or" operates as an inclusive or.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1 % to about 5%" or "about 0.1 % to 5%" should be interpreted to include not just about 0.1 % to about 5%, but also the individual values (e.g., 1 %, 2%, 3%, and 4%) and the sub-ranges (e.g., 0.1 % to 0.5%, 1.1 % to 2.2%, 3.3% to 4.4%) within the indicated range.

The terms "comprise" (and any form of comprise, such as "comprises" and "comprising"), "have" (and any form of have, such as "has" and "having"), and "include" (and any form of include, such as "includes" and "including"). As a result, an apparatus that "comprises," "has," or "includes" one or more elements possesses those one or more elements, but is not limited to possessing only those one or more elements. Likewise, a method that "comprises," "has," or "includes" one or more steps possesses those one or more steps, but is not limited to possessing only those one or more steps.

Any implementation of any of the systems, methods, and article of manufacture can consist of or consist essentially of - rather than comprise/have/include - any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb. Additionally, the term "wherein" may be used interchangeably with "where".

Further, a device or system that is configured in a certain way is configured in at least that way, but it can also be configured in other ways than those specifically described. The feature or features of one implementation may be applied to other implementations, even though not described or illustrated, unless expressly prohibited by this disclosure or the nature of the implementations.

Some details associated with the implementations are described above, and others are described below. Other implementations, advantages, and features of the present disclosure will become apparent after review of the entire application, including the following sections: Brief Description of the Drawings, Detailed Description, and the Claims.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers. The figures are drawn to scale (unless otherwise noted), meaning the sizes of the depicted elements are accurate relative to each other for at least the implementation depicted in the figures. Views identified as schematics are not drawn to scale.
**FIG. 1** is a diagram that illustrates an example of a system for manufacturing polymer foam using siloxane based copolymer foamed beads.
**FIG. 2** is a diagram that illustrates a schematic view of an example of the system of FIG. 1.
**FIGS. 3A**, **3B**, **and 3C** each illustrate a graph of an example of temperature and pressure profiles for producing micro- and nano-cellular polymer foams.
**FIGS. 4A, 4B, and 4C** each illustrates a schematic view of an example of foam nucleation and growth for producing a micro- and/or nano-cellular polymer foam.
**FIG. 5** is a diagram that illustrates a schematic view of manufacturing stages for producing foamed beads.
**FIG. 6** is a perspective view of an example of a system for producing pellets.
**FIG. 7** is a flowchart illustrating an example of a method of manufacturing foamed beads.
**FIG. 8** is a flowchart illustrating an example of a method of manufacturing polymer bead foam.

### DETAILED DESCRIPTION OF ILLUSTRATIVE IMPLEMENTATIONS

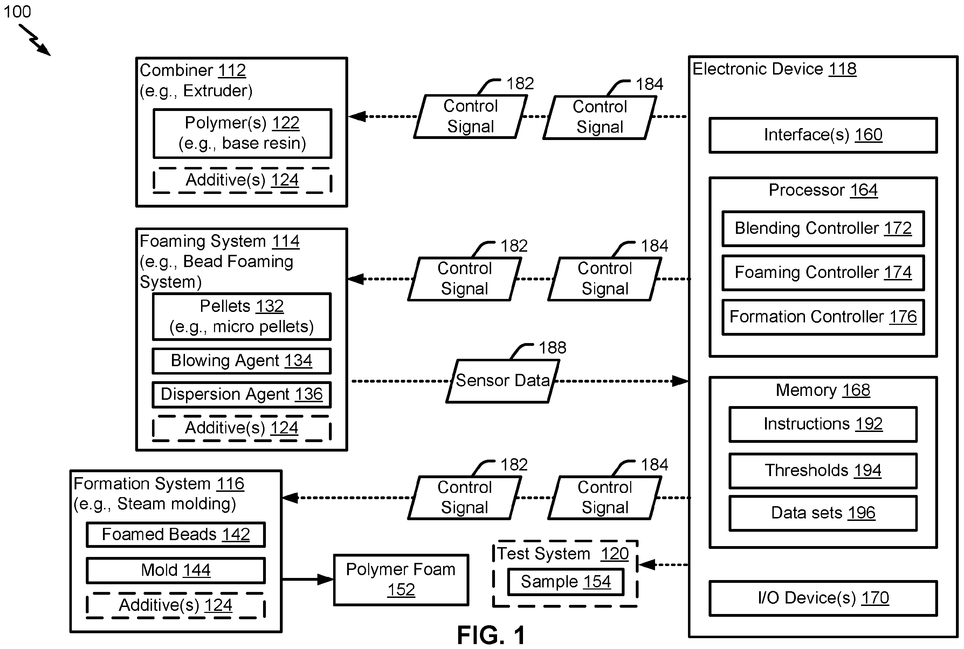

Referring to FIG. 1, FIG. 1 shows a block diagram of a system 100 for manufacturing polymer foam 152. Polymer foam 152 includes (is formed from) foamed beads 142 that include siloxane based copolymers. Polymer foam 152 has increased pore density and reduced weight and density, as compared to conventional micro- and nano-cellular foams that have foam densities of greater than 300 kg/m³.

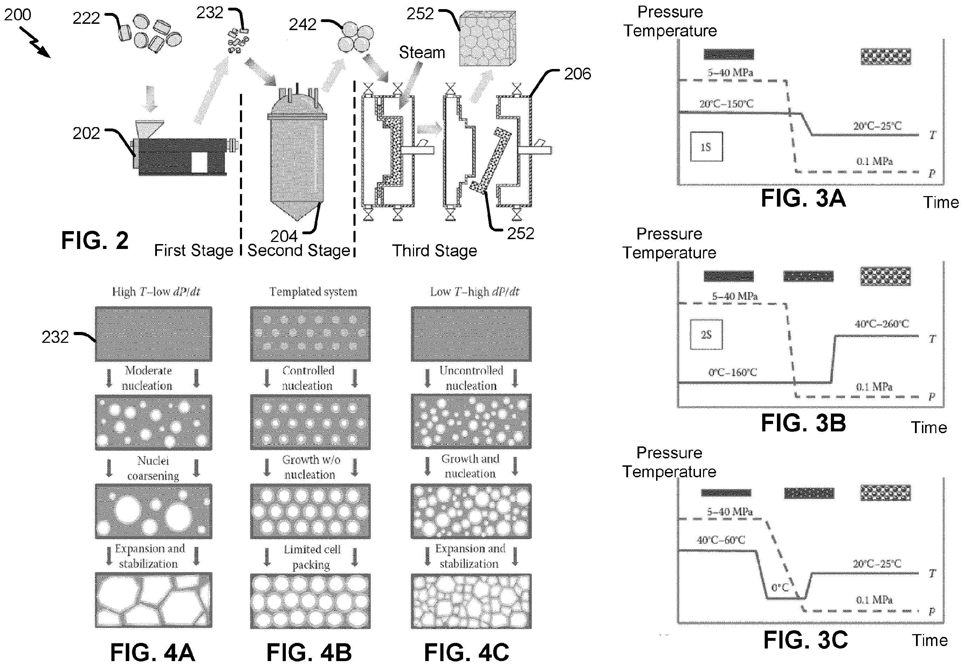

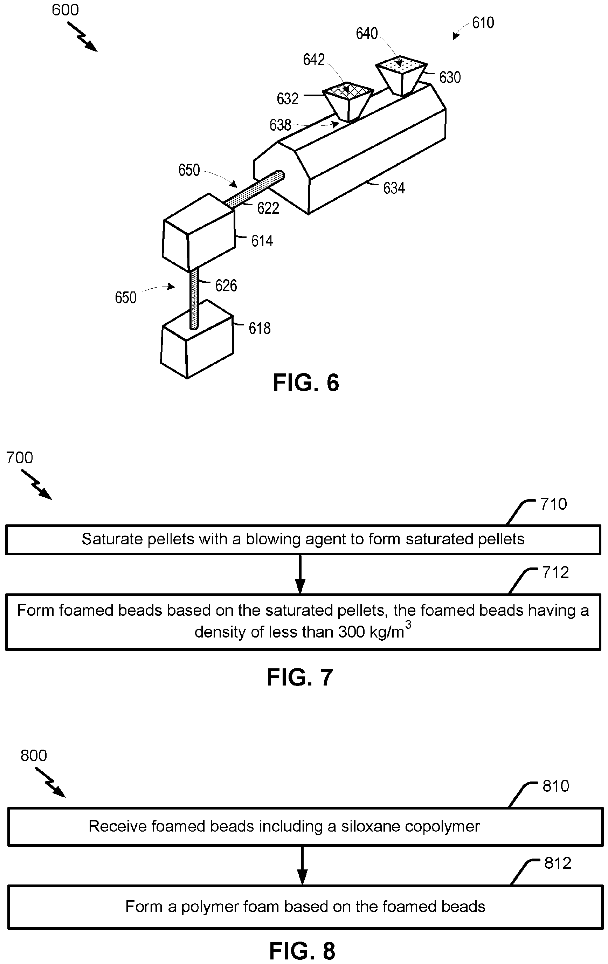

System 100 includes a combiner 112, a foaming system 114, a formation system 116, and an electronic device 118. Optionally, system 100 includes a test system 120, such as a pore size test system or a pore count test system. Combiner 112 is configured to create pellets 132 (e.g., solid micro-pellets) from one or more polymers 122 (e.g., a base resin) and operationally one or more additives 124. Combiner 112 may include or correspond to a melt-compounding system or a melt-blend combiner. For example, combiner 112 may include or correspond to an extrusion system, as described with reference to FIGS. 2 and 6.

Polymer 122 includes a siloxane based copolymer. Exemplary siloxane based copolymers include polycarbonate-siloxane (PC-siloxane) copolymers, polyphenylene ether-siloxane (PPE-siloxane) copolymers, polyetherimide-siloxane (PEI-siloxane) copolymers, and blends thereof. In a particular implementation, polymer 122 includes siloxane between 0.1 and 25 weight percent. In other implementations, polymer 122 includes a CO₂-philic copolymer (e.g., a CO₂-philic copolymer other than siloxane) and/or a polycarbonate (PC) based copolymer (PC COPO). The term "polycarbonate" (or "polycarbonates"), as used herein, includes copolycarbonates, homopolycarbonates and (co)polyester carbonates. In some implementations, polymer 122 is a polycarbonate-siloxane copolymer.

In a particular implementation, polymer 122 is a polycarbonate-polysiloxane block copolymer. Additionally, or alternatively, polymer 122 includes or corresponds to a polycarbonate block copolymer having CO₂-philic building blocks, such as CO₂ mixing or soluble polymer blocks.

In some implementations, the use of polysiloxane block copolymers having polysiloxane block lengths of about 5 to about 90 repeat units increases the solubility of carbon dioxide into the copolymer used for manufacturing the foam. The increased solubility permits the manufacturing of micro- and nano-cellular foams having a high density of pores.

The polycarbonate-polysiloxane block copolymers may be an alternating block copolymer, a graft copolymer or a star block copolymer. The polysiloxane block copolymers may be di-block, tri-block, or star-block copolymers.

The polycarbonate-polysiloxane block copolymers generally comprise a first block that comprises a polysiloxane and a second block that comprises polycarbonate that is copolymerized with the first block. In some implementations, the second block does not contain a polysiloxane.

An exemplary polycarbonate-polysiloxane block copolymer is one having the structure shown in the Formula (I) below: 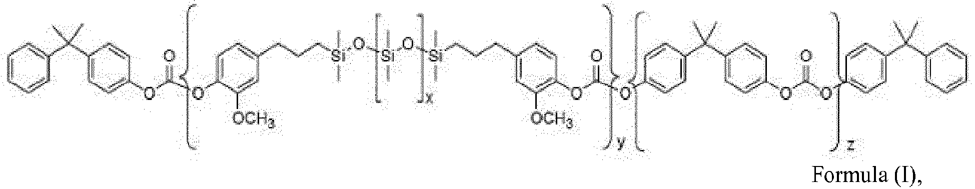 where the polysiloxane blocks are endcapped with eugenol, where x is about 1 to about 90, y is about 1 to about 90, and z is about 1 to about 90.

Useful polysiloxane blocks comprise repeating diorganosiloxane units, also referred to as "siloxane units", as shown in Formula (II): 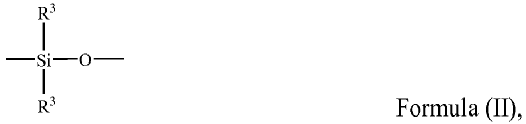 wherein each occurrence of R³ may be the same or different and is independently a C₁₋₁₂ hydrocarbyl. The siloxane units are generally present in the form of blocks containing about 5 to about 90 siloxane repeat units. In some implementations, siloxane units are generally present in the form of blocks containing about 45 siloxane repeat units. In a particular implementation, siloxane units are generally present in the form of blocks containing about 25 to about 65 siloxane repeat units. The number of siloxane repeat units may represent an average value.

The siloxane units are generally present in the forms of domains with an average diameter size of about 1 to about 100 nanometers (nm), specifically about 2 to about 50 nanometers, more specifically about 5 to about 20 nanometers.

The first block (that comprises the polysiloxane) is generally present in an amount of about 1 weight percent (wt%) to about 25 wt%, specifically about 3 to about 20 wt%, and more specifically about 4 to about 15 wt%, based on the total weight of the polysiloxane block copolymer. In an exemplary embodiment, the first block is generally present in an amount of about 5 to about 10 wt%, based on the total weight of the polysiloxane block copolymer. In some implementations, when the first block is used in an amount of about 5 wt%, based on the total weight of the polysiloxane block copolymer, the solubility of carbon dioxide in the polysiloxane block copolymer is increased by an amount of over 50 wt% when compared with a polymer that does not contain the first block.

The second block (that comprises the polycarbonate) can have an average molecular weight of about 500 grams per mole (g/mole) to about 50,000 g/mole, specifically about 1,000 g/mole to about 40,000 g/mole, and more specifically about 5,000 g/mole to about 30,000 g/mole. An exemplary average molecular weight for the second block copolymer is about 23,400 g/mole.

The second block (that comprises the polycarbonate) is generally present in an amount of about 75 wt% to about 99 wt%, specifically about 80 to about 97 wt%, based on the total weight of the polycarbonate-polysiloxane block copolymer, and more specifically about 85 to about 96 wt%, based on the total weight of the polycarbonate-polysiloxane block copolymer.

Additionally, or alternatively, one or more monomers or other polymers, including thermoplastic polymers, copolymers, and blends thereof, may be combined with polymer 122 to form pellets 132. In a particular implementation, polymer 122 is or includes multiphase nano-heterogeneous polymer systems, e.g. compatibilized (inherently immiscible) blends or copolymers designed to manipulate the partition of the blowing gas between several phases to enhance or bypass homogeneous nucleation, such as copolymer systems with nanosized domains.

As illustrative, non-limiting examples, additives 124 may include one or more of a crystallization inhibitor (e.g., co-monomers), viscosity reducing agent, impact modifier, flow modifier, antioxidant, thermal (e.g., heat stabilizer), light stabilizer, ultraviolet (UV) light stabilizer, UV absorbing additive, microwave absorbing additive (e.g., carbon black and/or carbon nanotubes), plasticizer, lubricant, antistatic agent, antimicrobial agent, colorant (e.g., a dye or pigment), surface effect additive, radiation stabilizer, nucleating agent or a combination thereof. The additives 124 may include impact modifiers such as styrene-butadiene thermoplastic elastomers, fire-retardant additives, colorants, thermal stabilizers, antioxidants, antistatic agents and flow promoters. Such additives 124 can be mixed at a suitable time during the mixing of the components for forming the pellets 132. Exemplary additives include surfactants, such as pentaerythritol tetrastearate (PETS), and plasticizers, such as resorcinol diphosphate (RDP) or Bisphenol-A-diphosphate.

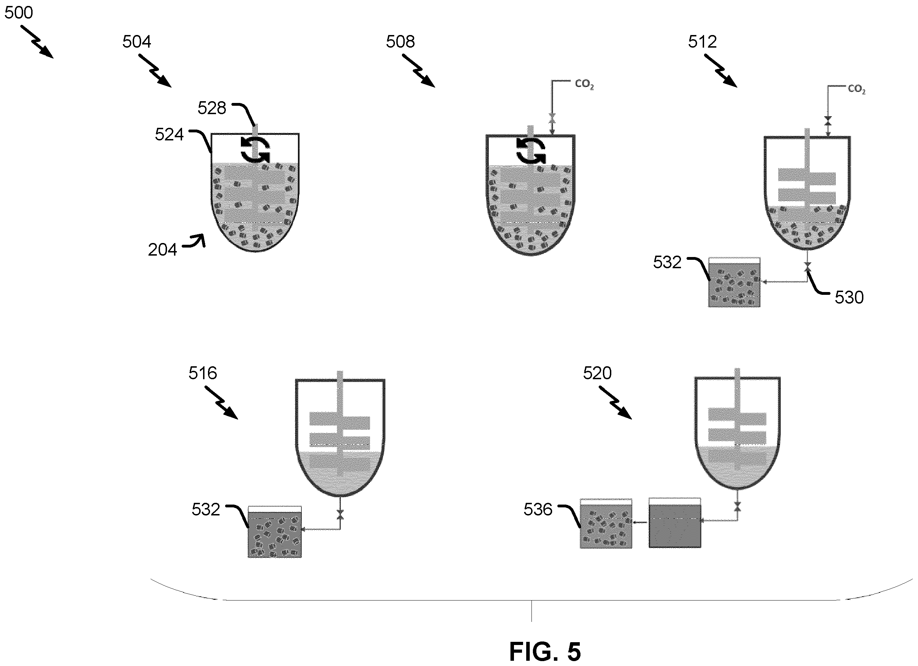

Foaming system 114 is configured to generate foamed beads 142 using the pellets 132 and a blowing agent 134. Optionally, foaming system 114 may generate foamed beads 142 using a dispersion medium 136 and/or one or more additives 124. Foaming system 114 may include or correspond to a solid-state foaming system, a bead foaming system, or another foaming system. An illustrative foaming system is described with reference to FIG. 2, and operations thereof are described with reference to FIGS. 3A-3C and 5.

Blowing agent 134 is configured or selected to be soluble in polymer 122. As used herein, the term "blowing agent" is defined as a chemical agent or a physical agent that is used to foam a polymer, often referred to as a foaming agent. The blowing agent 134 may be a gas, a solid, a liquid, or a supercritical blowing agent. A blowing agent 134 is used to form the polymer foam. Blowing agents 134 that may be used include inorganic agents, organic agents, and/or other chemical agents. Suitable inorganic blowing agents 134 include carbon dioxide, nitrogen, argon, water, air, nitrogen, and/or inert gases such as helium and argon. Organic agents include aliphatic hydrocarbons having 1 - 9 carbon atoms, aliphatic alcohols having 1 - 3 carbon atoms, and/or fully and partially halogenated aliphatic hydrocarbons having 1 - 4 carbon atoms.

In an implementation, blowing agent 134 may be selected from the group consisting of carbon dioxide, air, nitrogen, argon, gaseous hydrocarbons, and a combination thereof. The blowing agent 134 may be selected from the group consisting of solid carbon dioxide, liquid carbon dioxide, gaseous carbon dioxide, or supercritical carbon dioxide. In another implementation, blowing agent 134 may include an inert gas, such as helium, xenon, argon, or a combination thereof. Non-limiting examples of gaseous hydrocarbons include methane, ethane, propane, and/or butane. In another implementation, halohydrocarbons that would be expected to be in a gaseous form at ambient temperature and pressure may be used. Examples of such halohydrocarbons include fluorohydrocarbons, fluorocarbons, chlorocarbons, and/or chlorofluorocarbons.

The dispersion medium 136 (or dispersion agent) is configured to support pellets 132, blowing agent 134, and, optionally, one or more additives 124 (e.g., surfactants). To illustrate, dispersion medium 136 improves the separation of pellets 132 and reduces or prevent settling or clumping of pellets 132. Additionally, or alternatively, dispersion medium 136 enables mixing of pellets 132, blowing agent 134, and, optionally, one or more additives 124 and enables suspension of pellets 132 during mixing. In some implementations, the dispersion medium 136 includes oil or water.

Formation system 116 is configured to generate polymer foam 152, such as a molded part or polymer foam part, using the foamed beads 142. Formation system 116 may include or correspond to a steam chest molding system, such as steam chest molding system 206 of FIG. 2, a bead foam molding system, an injection molding system, or a combination thereof. Although described as separate systems, foaming system 114 and formation system 116 may be incorporated into a single system.

Electronic device 118 includes one or more interfaces 160, one or more processors (e.g., one or more controllers), such as a representative processor 164, a memory 168, and one or more input/output (I/O) devices 170. Interfaces 160 may include a network interface and/or a device interface configured to be communicatively coupled to one or more other devices, such as combiner 112, foaming system 114, formation system 116, or test system 120. For example, interfaces 160 may include a transmitter, a receiver, or a combination thereof (e.g., a transceiver), and may enable wired communication, wireless communication, or a combination thereof. Although electronic device 118 is described as a single electronic device, in other implementations system 100 includes multiple electronic devices. In such implementations, such as a distributed control system, the multiple electronic devices each control a sub-system of system 100, such as combiner 112, foaming system 114, formation system 116, or test system 120.

Processor 164 includes a blending controller 172, a foaming controller 174, and a formation controller 176. For example, blending controller 172 (e.g., processor 164) may be configured to generate and/or communicate one or more blending control signals to combiner 112. Blending controller 172 is configured to control (or regulate) an environment, such as an air quality, temperature, and/or pressure, within combiner 112 (e.g., a chamber or extruder thereof) and/or delivery/injection of materials into combiner 112. For example, blending controller 172 may be configured to generate and/or communicate one or more environment control signals 182 to combiner 112, one or more ingredient delivery control signals 184 to combiner 112, or a combination thereof.

Foaming controller 174 is configured to control (or regulate) an environment, such as a temperature (e.g., heat) and/or pressure, within foaming system 114 (e.g., an autoclave or pressure vessel thereof) and/or delivery/injection of materials into foaming system 114 (e.g., the autoclave or pressure vessel thereof). For example, foaming controller 174 may be configured to generate and/or communicate one or more environment control signals 182 to foaming system 114, one or more ingredient delivery control signals 184 to foaming system 114, or a combination thereof.

Formation controller 176 is configured to control (or regulate) an environment, such as a temperature (e.g., heat) and/or pressure, within formation system 116 (e.g., mold 144 thereof) and/or delivery/injection of materials into formation system 116 (e.g., mold 144 thereof). For example, formation controller 176 may be configured to generate and/or communicate one or more environment control signals 182 to formation system 116, one or more ingredient delivery control signals 184 to formation system 116, or a combination thereof. Each of combiner 112, foaming system 114, and formation system 116, can include one or more corresponding sensors (not shown) configured to generate sensor data, such as sensor data 188. The sensor data 188 can indicate conditions such as temperature, pressure, time, viscosity, etc.

Although one or more components of processor 164 are described as being separate components, at in some implementations, one or more components of the processor 164 may be combined into a single component. For example, although foaming controller 174 and formation controller 176 are described as being separate, in other implementations, foaming controller 174 and formation controller 176 may be incorporated into a single controller. Additionally, or alternatively, one or more components of processor 164 may be separate from (e.g., not included in) processor 164. To illustrate, blending controller 172 may be separate and distinct from processor 164.

Memory 168, such as a non-transitory computer-readable storage medium, may include volatile memory devices (e.g., random access memory (RAM) devices), nonvolatile memory devices (e.g., read-only memory (ROM) devices, programmable read-only memory, and flash memory), or both. Memory 168 may be configured to store instructions 192, one or more thresholds 194, and one or more data sets 196. Instructions 192 (e.g., control logic) may be configured to, when executed by the one or more processors 164, cause the processor(s) 164 to perform operations as described further here. For example, the one or more processors 164 may perform operations as described with reference to FIGS. 7 and 8. The one or more thresholds 194 and one or more data sets 196 maybe configured to cause the processor(s) 164 to generate control signals. For example, the processors 164 may generate and send control signals responsive to receiving sensor data, such as sensor data 188 from foaming system 114. The temperature or ingredient flow rate can be adjusted based on comparing sensor data 188 to one or more thresholds 194, one or more data sets 196, or a combination thereof.

In some implementations, processor 164 may include or correspond to a microcontroller/microprocessor, a central processing unit (CPU), a field-programmable gate array (FPGA) device, an application-specific integrated circuits (ASIC), another hardware device, a firmware device, or any combination thereof. Processor 164 may be configured to execute instructions 192 to initiate or perform one or more operations described with reference to FIGS. 2, 5, and 6 and/or one more operations of the methods of FIGS. 7 and 8.

The one or more I/O devices 170 may include a mouse, a keyboard, a display device, the camera, other I/O devices, or a combination thereof. In some implementations, the processor(s) 164 generate and send control signals responsive to receiving one or more user inputs via the one or more I/O devices 170.

Electronic device 118 may include or correspond a communications device, a mobile phone, a cellular phone, a satellite phone, a computer, a tablet, a portable computer, a display device, a media player, a desktop computer, or a server. Additionally, or alternatively, the electronic device 118 may include a set top box, an entertainment unit, a personal digital assistant (PDA), a monitor, a computer monitor, a television, a tuner, a video player, any other device that includes a processor or that stores or retrieves data or computer instructions, or a combination thereof.

In some implementations, system 100 further includes test system 120, such as a pore size test system. Test system 120 is configured to perform a pore size test on a sample 154 of foamed beads 142 or polymer foam 152 (e.g., a molded part of polymer foam 152) to obtain an average pore size value of the foamed beads 142 or polymer foam 152. In a particular implementation, test system 120 includes or corresponds to a cryo-fracture test system. For example, test system 120 may include a cryo-fracture device and a scanning electron microscope (SEM) in a particular implementation. The test system 120 may be controlled manually or by signals (e.g., control signal(s) 182, 184), such as a control signal from electronic device 118. In other implementations, system 100 further includes a (pore count) test system 120. In such implementations, test system 120 is configured to perform a pore count test on sample 154 to obtain a pore count value (or pore density value) of the polymer foam 152.

During operation of system 100, pellets 132 are formed from one or more polymers 122 (e.g., base resin) and, optionally, one or more additives 124. For example, combiner 112 combines (e.g., mixes or blends), responsive to control signals 182, 184 from the blending controller 172, extruded pellets of the one or more polymers 122 and, optionally, additive(s) 124. To illustrate, blending controller 172 may send one or more environment control signals 182 to combiner 112 to adjust conditions (e.g., heat, pressure, air quality) of the combiner 112 or conditions of a polymer composite (viscosity, temperature, etc.) used to form pellets 132. Additionally, or alternatively, blending controller 172 may send one or more ingredient delivery control signals 184 to combiner 112 to adjust a rate and/or or an amount of a particular polymer of the one or more polymers 122, one or more additives 124, or a combination thereof.

The one or more additives 124 can be selected to impart certain characteristics to the foamed beads 142 or polymer foam 152. Additive(s) 124 may be incorporated into pellets 132, with the proviso that the additive(s) 124 are selected so as to not significantly adversely affect the desired properties of pellets 132 (e.g., the additives 124 have good compatibility with the polymer 122 and the blowing agent 134). For example, the additive(s) 124 selected do not significantly adversely affect solubility of the blowing agent 134 in the polymer 122, crystallization of the polymer 122, foaming, or nucleation.

After generation of pellets 132, the pellets 132 are provided to foaming system 114 for saturation and expansion. Foamed beads 142 (e.g., fully or partially foamed beads) are generated by the foaming system 114 from pellets 132. For example, responsive to control signals 182, 184 from the foaming controller 174, the foaming system 114 combines (e.g., mixes or blends) pellets 132 and blowing agent 134 (and optionally dispersion medium 136 and/or additive(s) 124) to saturate the pellets 132 with the blowing agent 134. To illustrate, foaming controller 174 may send one or more environment control signals 182 to foaming system 114 to adjust conditions (e.g., heat, pressure, air quality) of the foaming system 114 or conditions of the pellets 132 (viscosity, temperature, saturation level, foaming/expansion rate, etc.). Additionally, or alternatively, foaming controller 174 may send one or more ingredient delivery control signals 184 to foaming system 114 to a adjust rate and/or an amount of pellets 132, blowing agent 134, dispersion medium 136, one or more additives 124, or a combination thereof.

Foaming controller 174 may further send or more control signals to control depressurization, heat treatment, and/or control cooling of saturated-pellets 132 (i.e., pellets 132 with a dissolved blowing/foaming agent 134 between polymer 122 particles thereof). Controlling depressurization, heat treatment, and/or control cooling of saturated-pellets 132 controls nucleation and expansion of the blowing agent 134 in the saturated-pellets 132 and thus formation of the foamed beads 142. Foaming controller 174 may also send or more control signals to control collection of saturated-pellets 132/foamed beads 142 from the foaming system 114 (e.g., a pressure vessel or autoclave thereof). The foamed beads 142 have cell sizes between .01 and 100 microns. Optionally, the foamed beads 142 are homogenous and/or do not have a solid skin. In some implementations, foamed beads 142 are homogenous, have cell sizes between 2 and 20 microns, do not have a solid skin, or a combination thereof.

After formation of foamed beads 142 at foaming system 114, the foamed beads 142 are provided to formation system 116, and formation system 116 forms or generates polymer foam 152. For example, formation system 116 may form a molded part of polymer foam 152 via steam chest molding. To illustrate, formation controller 176 may send or more control signals to control delivery (e.g., injection) of foamed beads 142 to mold 144 (e.g., a steam chest) of formation system 116. Mold 144 may include or correspond to a tool or die. In some implementations, mold 144 is a negative mole and includes or defines one or more cavities that correspond to a shape of polymer foam 152.

In some implementations, foaming controller 174 or formation controller 176 may send or more control signals to control foaming (second foaming) of foamed beads 142, such as to control application of temperature and/or pressure to hot bath, a mold, or steam chest to control foaming rate and/or size. Additionally, or alternatively, formation controller 176 may send or more control signals to control sintering of foamed beads 142 to form a molded part, such as to control application of temperature and pressure to mold 144. To illustrate, formation controller 176 sends an environmental control signal 182 to control application of steam to mold 144, such as a temperature, a pressure, and an amount of the steam. Formation controller 176 may further send one or more control signals to control cooling of foamed beads 142 and release of polymer foam 152 from mold 144. For example, mold 144 may have multiple parts and the multiple parts may be decoupled from each other responsive to control signals to reveal and enable release of polymer foam 152.

In some implementations, a sample 154 is taken from polymer foam 152 (or foamed beads 142) and the pore test system 120 analyzes the sample 154 to determine an average pore size value for the polymer foam 152. As an illustrative example, polymer foam 152 is subjected to cryo-fracturing to generate sample 154. To illustrate, the polymer foam 152 is quickly frozen with liquid nitrogen or another freezing agent and is broken with a sharp blow to generate sample 154. The sample 154 is analyzed by a SEM to determine a maximum transverse dimension and a minimum transverse dimension for a number of random pores of sample 154, the pores of sample 154 correspond to pores of a cross section of polymer foam 152. To illustrate, maximum and minimum pore widths are determined for 100 pores, which are randomly selected or pseudo-randomly selected from a 5 micron by 5 micron section of sample 154, to generate the average pore size value for the polymer foam 152. Additionally, or alternatively, the pore test system 120 analyzes the sample 154 (or another sample) to generate an average pore count value for polymer foam 152. The sample 154 is analyzed by the SEM to count a number of pores in sections of sample 154. To illustrate, pore counts are determined for 10 sections, which are randomly selected or pseudo-randomly selected, of the sample to generate the pore count value for the polymer foam 152. In other implementations, the pore count is determined mathematically based on the density and the average pore size.

The polymer foam 152 (or a part incorporating polymer foam 152) includes (and is formed from) foamed beads 142 that enables reduced weight. Foamed beads 142 and/or polymer foam 152 may have reduced densities. Accordingly, the present disclosure overcomes the existing challenges of forming micro- and nano-cellular polymer foams with reduced density and reduced weight by using siloxane based copolymer based foamed beads. Additionally, the present disclosure overcomes the existing challenges of industrial scale production of micro- and nano-cellular polymer foams and formation of foamed parts with complex geometries.

In some implementations, foamed beads 142 and/or polymer foam 152 has an average pore size of 2 to 20 microns, also known as micrometers (µm). In a particular implementation, nano-cellular foamed beads 142 and/or polymer foam 152 has an average pore size of 100 nm to 500 nm, sub-microcellular foamed beads 142 and/or polymer foam 152 has an average pore size of 0.5 to 1 microns, and micro-cellular foamed beads 142 and/or polymer foam 152 has an average pore size of 1 to 20 microns. Alternatively, nano-cellular foamed beads 142 and/or polymer foam 152 has an average pore size of greater than 100 nanometers. In other implementations, foamed beads 142 and/or polymer foam 152 has an average pore size of substantially between any two of: 0.01, 0.1, 0.2, 0.5, 1, 2, 3, 4, 5, 6, 7, 8, 9, 10, 12, 14, 16, 17, 18, 19, 20, 21, or 22 microns.

In some implementations, nano-cellular foamed beads 142 and/or polymer foam 152 has a cell density of greater than substantially 10E12 cells per cubic centimeter. In a particular implementations, nano-cellular foamed beads 142 and/or polymer foam 152 has a cell density of greater than substantially 10E15 cells per cubic centimeter. In other implementations, nano-cellular foamed beads 142 and/or polymer foam 152 has an average pore size of less greater than or equal to substantially one of: 10E13, 10E14, 10E16, 10E17, 10E18, or 10E19 cells per cubic centimeter.

In some implementations, sub-microcellular foamed beads 142 and/or polymer foam 152 has a cell density between substantially 10E12 and 10E15 cells per cubic centimeter. In other implementations, sub-microcellular foamed beads 142 and/or polymer foam 152 has an average pore size of between any two of substantially: 10E11, 10E12, 10E13, 10E14, 10E15, or 10E16 cells per cubic centimeter. In some implementations, microcellular foamed beads 142 and/or polymer foam 152 has a cell density between substantially 10E9 and 10E12 cells per cubic centimeter. In other implementations, microcellular foamed beads 142 and/or polymer foam 152 has an average pore size of between any two of substantially: 10E8, 10E9, 10E10, 10E11, 10E12, or 10E13 cells per cubic centimeter.

In some implementations, foamed beads 142 and/or polymer foam 152 has a relative density of 0.15 relative to the polymer material of the foamed beads 142 or polymer foam 152, such as polymer 122.

In some implementations, foamed beads 142 and/or polymer foam 152 has a foam density that is from substantially 1 percent to substantially 50 percent of a bulk density of a material that includes the foamed beads 142 and/or polymer foam 152 (i.e., the polymer 122). In a particular implementations, foamed beads 142 and/or polymer foam 152 has a foam density that is from substantially 5 percent to substantially 25 percent of the bulk density of the material comprising the foamed beads 142 and/or polymer foam 152. In other implementations, polymer foamed beads 142 and/or foam 152 has a foam density that is substantially between any two of: 0.5, 1, 2, 5, 10, 15, 20, 25, 30, 35, 40, 45, 50 percent of the bulk density of the material comprising the polymer foam 152.

In some implementations, polymer foam 152 comprises a thermal conductivity of substantially 0.001 to substantially 0.01 Watts per meter-Kelvin. In a particular implementation, polymer foam 152 comprises a thermal conductivity of substantially 0.001 to substantially 0.01 Watts per meter-Kelvin over a temperature range of ambient temperature (e.g., 23 degrees Celsius) to substantially 350 degrees Celsius. In other implementations, polymer foam 152 comprises a thermal conductivity of substantially 0.001 to substantially 0.05 Watts per meter-Kelvin. In some such implementations, polymer foam 152 comprises the thermal conductivity over a temperature range of substantially ambient temperature to substantially 350 degrees Celsius.

In some implementations, cells of foamed beads 142 and/or polymer foam 152 comprise an open cell structure, a closed cell structure, or a combination thereof. In a particular implementation, foamed beads 142 and/or polymer foam 152 is substantially comprised of open cell structures. In another particular implementation, foamed beads 142 and/or polymer foam 152 is substantially comprised of a closed cell structures.

Referring to FIG. 2, an example of system 100 is shown that includes an extrusion system 202, an autoclave foaming system 204, and a steam chest molding system 206. The extrusion system 202 may include or correspond to combiner 112, the autoclave foaming system 204 may include or correspond to foaming system 114, and the steam chest molding system 206 may include or correspond to formation system 116.

FIG. 2 illustrates a schematic representation of three manufacturing stages for forming and using foamed beads 242, often referred to as expanded beads. The three manufacturing stages include: a first stage associated with micro-pellet 232 preparation (or mini-pellet preparation), a second stage associated with expanded bead foaming, and a third stage associated with steam chest molding. During a first manufacturing stage, micro-pellets 232 are formed from a base resin 222 and one or more additives (e.g., 124) by extrusion system 202. Extrusion system 202 employs an extrusion process (e.g., melt-blending) to prepare the micro-pellets 232, and an exemplary extrusion process is described with reference to FIG. 6. The base resin 222 may include or correspond to polymer 122, the additives may include or correspond to additives 124, the micro-pellets 232 may include or correspond to pellets 132.

During a second manufacturing stage, the micro-pellets 232 and a blowing agent 234 are combined in a pressure vessel (e.g., autoclave) of autoclave foaming system 204. Micro-pellets 232 and blowing agent 234 are subjected to heat and pressure to saturate the micro-pellets 232 with blowing agent 234 to form saturated micro-pellets 232. The heat and/or pressure is then reduced and the saturated micro-pellets 232 then undergo nucleation and foaming to form foamed beads 242 (e.g., expanded beads). The foamed beads 242 may include or correspond to foamed beads 142. Details of the saturation process, the depressurization process, and optional post saturation heating and cooling are described further with reference to FIGS. 3-5 and 7.

During a third manufacturing stage, the foamed beads 242 are provided to a steam chest mold of steam chest molding system 206, and the foamed beads 242 are molded/sintered together under heat and/or pressure from steam to form a molded foam part 252 (e.g., 152) in the steam chest mold. The molded foam part 252 may include or correspond to polymer foam 142, and the steam chest mold may include or correspond to mold 144.

FIGS. 3A-3C and 4A-4C illustrate examples of saturation and foaming operations for producing polymer foams. FIGS. 3A-3C each illustrate operations of a foaming system, such as foaming system 116 or autoclave foaming system 204, which produces nucleation growth and expansion in a polymer material, and FIGS. 4A-4C each illustrate the nucleation growth and expansion in the polymer material resulting from the operations illustrated in FIGS. 3A-3C. The polymer material may include or correspond to the polymer 122 of pellets 132 or base resin 222 of micro-pellets 232.

Referring to FIGS. 3A-3C, diagrams depicting three examples of temperature and pressure profiles for producing micro- and nano-cellular foams are shown. In FIGS. 3A-3C, a horizontal axis represents time and a vertical axis represents temperature and pressure of the foaming system, such as a pressure vessel thereof. Although the horizontal axis indicates time in each of FIGS. 3A-3C, there is no relationship between time values of the diagrams, i.e., a particular time or length of time of one diagram is not correlated with another time or length of time of another diagram. The examples of FIGS. 3A-3C correspond to the examples of FIG. 4A-4C. For example, a first temperature and pressure profile in FIG. 3A depicts operation of a one-step (1S) process which produces the nucleation illustrated in a first nucleation example of FIG. 4A; a second temperature and pressure profile in FIG. 3B depicts operation of a two-step (2S) process which produces the nucleation illustrated in a second nucleation example of FIG. 4B; and a third temperature and pressure profile in FIG. 3C depicts operation of a modified two-step process with a temperature quench before depressurization which produces the nucleation illustrated in a third nucleation example of FIG. 4C.

Referring to FIGS. 4A-4C, three examples of nucleation for producing micro- and nano-cellular foams are shown. In FIG. 4A, the first nucleation example is directed to operations of homogeneous systems foamed under the conditions (i.e., high temperature and low pressure rate change) of FIG. 3C. Such conditions can have insufficient nucleation density, favor nuclei ripening (e.g., nuclei coarsening), and produce micro-cellular foams or sub-microcellular foams. The higher temperature and low pressure rate change induce moderate nucleation and nuclei coarsening. After the nuclei coarsening, the nuclei are larger and when subjected to further expansion and stabilization, the nuclei form larger cells, i.e., micro-sized cells.

In FIG. 4B, the second nucleation example is directed to operations of Templated systems under the conditions (i.e., moderate temperature and moderate pressure rate change) of FIG. 3B and produce nano-cellular foams or sub-microcellular foams with low expansion ratios (e.g., expansion ratio less than 2). Templated systems typically have controlled nucleation and have growth without further nucleation, and thus result in limited cell packing and cell density.

In FIG. 4C, the third nucleation example is directed to operations of homogeneous systems foamed under conditions (i.e., low temperature and high pressure rate change) of FIG. 3C which can favor high nucleation and growth simultaneously. The high nucleation and growth can yield low-density nano-cellular polymer foams. Such systems, have uncontrolled nucleation followed by further nucleation and growth simultaneously which expand and stabilize to form low-density nano-cellular polymer foams or sub-microcellular foams.

Regarding the first nucleation example of FIG. 4A (i.e., the one-step process), if the polymer of the pellet becomes rubbery upon saturation with a blowing agent (e.g., CO₂), the internal pressure in the nuclei formed during pressure release deform the polymer matrix and allow foam expansion to occur. The diffusion of CO₂ out of the polymer matrix returns the matrix to a glassy solid, at which point foam expansion stops.

As illustrated by the foaming results under different conditions, such as in FIGS. 4B and 4C, one parameter that impacts whether foaming can occur is the saturation pressure. Regarding the second temperature and pressure profile example of FIG. 4B which depicts the two-step process, saturation below the critical pressure of the blowing agent (e.g., 7.4 MPa for CO₂) generally produces little or no foaming until a second heating step is applied. For CO₂, pressures above 10 MPa, especially at temperatures in the vicinity of its critical temperature (31 °C), CO₂ is a dense supercritical fluid or liquid, the expansion of which provides a relatively large driving force for the growth of the nuclei. The expansion of the blowing agent is particularly effective in the supercritical state, where interfacial tension effects are reduced.

Some variations of the two-step processes exist. For instance, as illustrated in FIG. 3B, the two-step process can involve expansion in both the depressurization and the thermal conditioning steps if soaking is performed when the CO₂-saturated polymer is in a rubbery regime (i.e., at a temperature between a glass transition temperature and a melting temperature of the polymer). Conversely, as illustrated in FIG. 3C, in a modified two-step process, soaking can be done in the rubbery regime, but the temperature is decreased to turn the mixture glassy before the pressure is reduced with optionally a second thermal conditioning step to enhance expansion.

Referring to FIG. 5, a schematic diagram of a bead foaming process 500 that includes stages 504-520 of the autoclave forming system 204 (or foaming system 114) is shown. In FIG. 5, a first stage 504 includes forming a homogeneous dispersion of micro-pellets in a liquid (e.g., dispersion medium 134). During the first stage, a mixer 528 of a pressure vessel 524 of the autoclave forming system 204 may be activated to mix the micro-pellets (e.g., 232), the dispersion medium, and, optionally, one or more surfactants to form the homogeneous dispersion. The micro-pellets may include or correspond to pellets 132 or micro-pellets 232.

A second stage 508 includes gas dissolution of a blowing agent (e.g., blowing agent 134, such as CO₂) in the micro-pellets at a temperature lower than a glass transition temperature (Tg) of a polymer (e.g., 122) of the micro-pellets for the two-step process or near (e.g., slightly above, such as 1 to 10 percent above) the glass transition temperature (Tg) of the polymer (e.g., 122) for the one-step process. During the second stage, the blowing agent is absorbed by the micro-pellets and saturated micro-pellets are formed. A third stage 512 includes releasing the pressure, via an exit valve 530, of the pressure vessel 524 of the autoclave forming system 204 and collecting the saturated micro-pellets in a first container 532, such as a bead storage tank or collection tank. Depressurization of the saturated micro-pellets causes partial nucleation and degasification, i.e., the blowing agent in the saturated micro-pellets expands and a portion of the blowing agent desorbs from the saturated micro-pellets.

A fourth stage 516 includes heat treating, at the first container 532, the saturated micro-pellets for a period of time at a particular temperature to induce post foaming in the saturated micro-pellets to form foamed beads. As illustrated in FIG. 5, the fourth stage includes subjecting the saturated micro-pellets to a heated fluid (e.g., water, oil, or a mixture) bath to induce post depressurization foaming. Exemplary oils include silicone oil, sunflower oil, or olive oil. In other implementations, the saturated micro-pellets are not heat treated and the saturated micro-pellets are further foamed or expanded during part formation and bead sintering by a formation system (e.g., 116). In some such implementations, the saturated micro-pellets can be subjected to a cold fluid bath to quench the saturated micro-pellets which reduces or stops foaming. The fluid used for the cold fluid bath may be the same fluid or a different fluid as the fluid of the heated fluid bath. Exemplary fluids for dispersion fluids and the fluids of the fourth stage 516 may have a relatively low evaporation energy. Such low evaporation energy includes evaporation energies of less than or equal to 500 KJ/kg and may reduce or limit formation of a dense, non-foamed layer on the surface of the expanded bead. A fifth stage 520 includes stabilization of the foamed beads by cooling. As illustrated in FIG. 5, the fifth stage includes cooling the foamed beads in a chilled or room temperature fluid bath (e.g., in the first container 532 or a second container 536) to stop further nucleation and cell growth. The operations of FIG. 5 described above can be implemented in a batch, semi-batch, or a continuous manner. Continuous methods are often more desirable since they may allow for better process control and enable production of nano-cellular polymer foams.

Referring to FIG. 6, an example of a system 600 for producing extrudate is shown. System 600 is configured to use an extrusion process to form a polymer composition and to form extrudate (e.g., pellets 132) from the polymer composition, as described herein. System 600 may include or correspond to combiner 112. System 600 includes an extruder 610, an injector 614, and a die 618. Extruder 610 is coupled to injector 614 via one or more conduits 622, such as one or more tubes. Injector 614 is coupled to die 618 via one or more conduits 626, such as one or more tubes. System 600 may be controlled by a controller (not shown), such as processor 164 and/or blending controller 172 of FIG. 1.

Extruder 610 includes one more hoppers, such as a first hopper 630 and a second hopper 632, and a barrel 634 coupled to the one or more hoppers. For example, barrel 634 may be coupled to a hopper via a feed throat 638. Each hopper 630, 632 is configured to receive material (e.g., pellets, granules, flakes, powders, and/or liquids) that is provided (e.g., gravity fed or force fed) from the hopper to barrel 634 via a corresponding feed throat 638. As shown, first hopper 630 has received a first material 640 and second hopper 632 has received a second material 642. First material 640 includes a polymer, such as polymer 122, and second material 642 includes another polymer or additive(s) 124. Although described as being provided to separate hoppers, in other implementations, first and second materials 640, 642 may be provided by the same hopper.

In some implementations, another material can be combined with first and second materials 640, 642 in the extruder 610. For example, the other material may be received by the extruder 610 via the one or more hoppers. The other material can include one or more additive(s) 124, such as an impact modifier, flow modifier, antioxidant, heat stabilizer, light stabilizer, ultraviolet (UV) light stabilizer, UV absorbing additive, plasticizer, lubricant, antistatic agent, antimicrobial agent, colorant (e.g., a dye or pigment), surface effect additive, radiation stabilizer, or a combination thereof, as illustrative, non-limiting examples.

Each hopper 630, 632 provides its corresponding material 640, 642 into barrel 634 where the materials are combined to form a polymer composite 650 (e.g., a polymer composition or a blended composition). For example, the materials are gradually melted in barrel 634 by the mechanical energy (e.g., pressure) generated by turning screws, by heaters arranged along barrel 634, or both. The molten materials are mixed together (e.g., blended) to form polymer composite 650. Polymer composite 650 may include or correspond to a polymer composite formed by combiner 112 and used to form pellets 132. Polymer composite 650 is provided from barrel 634 via conduit 622 to injector 614. Injector 614 injects polymer composite 650 into die 618 via conduit 626. Polymer composite 650 flows through the die 618 to form strands of extrudate (e.g., strands of polymer composite 650). The extruded polymer composite 650 can be cooled in a water bath, or by spraying the extrudate in a conduit 622 (e.g., a conveyor belt) as the extrudate moves from extruder 610 to a granulator via conduit 622. The granulator breaks the extrudate (e.g., the strands thereof) into pieces, such as pellets. The pellets (e.g., pellets 132) of polymer composite 650 can then be used in a foaming process or in a molding process, such as the foaming processes described with reference to FIGS. 1-3, and 5 and/or the forming processes described with reference to FIGS. 1 and 2.

Referring to FIG. 7, an example of a method of manufacturing polymer foamed beads is shown. Method 700 may be performed by a manufacturing device or system, such as system 100 (e.g., foaming system 114 and/or electronic device 118) and/or autoclave foaming system 204 (e.g., the pressure vessel 524 thereof). The foamed beads may include or correspond to foamed beads 142, foamed beads 242, or pellets 132 saturated with a foaming agent (e.g., blowing agent 134), as described herein.

Method 700 includes saturating pellets with a blowing agent to form saturated pellets, where the pellets include a siloxane based copolymer, at 710. For example blowing agent 134 is introduced into a pressure vessel and dissolves in pellets 132 or micro-pellets 232 under pressure to form fluid saturated pellets, such as CO₂ saturated pellets. In a particular implementation, saturating the pellets includes combining, at an pressure vessel (e.g., an autoclave), the pellets, one or more additives, and the blowing agent to form a mixture, and applying, by the pressure vessel (e.g., an autoclave), heat and pressure to the mixture to form the saturated pellets. In some implementations, the additives include surfactants, such as calcium stearate, talc, sodium, C12-14, alkyl sulfate, or a combination thereof.

Method 700 also includes forming foamed beads based on the saturated pellets, where the foamed beads have a density of less than 300 kg/m³, at 712. For example, the saturated pellets 132 undergo depressurization in the pressure vessel and are optionally placed into a fluid bath for heat treatment to induce post foaming. In a particular implementation, forming the foamed beads includes depressurizing the saturated pellets and heat treating the saturated pellets in a heated fluid bath. During depressurization and heat treating the blowing agent undergoes nucleation and expansion in the saturated pellets to form the foamed beads. Additionally, or alternatively, method 700 further includes quenching the foam beads in a fluid (e.g., a water, an oil, or a mixture) bath maintained at a temperature that is below a glass transition temperature of a second block (e.g., polycarbonate block) of the siloxane based copolymer. Quenching the foam beads can be used to adjust/control pore sizes of the foamed beads and polymer foams made therefrom.

In some implementations, such as for microcellular polymer foam formation, saturating the pellets is performed at a temperature higher than a glass transition temperature (Tg) of the siloxane based and/or polycarbonate based copolymer or higher than (e.g., right/slightly above) a melting temperature (Tm) of the siloxane based and/or polycarbonate based copolymer. In other implementations, such as for nano-cellular polymer foam formation, saturating the pellets is performed at a temperature lower than a glass transition temperature (Tg) of the siloxane based and/or polycarbonate based copolymer when the siloxane based and/or polycarbonate based copolymer is amorphous, or at a temperature lower (e.g., slightly below) than a melting temperature (Tm) when the siloxane based and/or polycarbonate based copolymer is semi-crystalline.

One product or article of manufacture that can be formed from method 700 includes polymer foam 152 or molded part 252, such as nano-cellular foam or micro-cellular foam. Thus, method 700 describes manufacturing of foamed beads, such as foamed beads 142. Method 700 advantageously enables creating foamed beads with decreased density, such as densities less than or equal to 300 kg/m³.

Referring to FIG. 8, an example of a method of manufacturing a polymer foam is shown. Method 800 may be performed by a manufacturing device or system, such as system 100 (e.g., formation system 116 and/or electronic device 118) and/or steam chest molding system 206. The polymer foam may include or correspond to polymer foam 152 or molded foam part 252, as described herein. For example, the polymer foam 152 can include microcellular foam or nano-cellular foam.

Method 800 includes receiving foamed beads including a siloxane based copolymer, at 810. For example, the foamed beads may include or correspond to foamed beads 142 or foamed beads 242. Method 800 also includes forming a polymer foam based on the foamed beads, at 812. For example, foamed beads 142 are in a partially-expanded state when applied to the mold 144 or steam chest molding system 206 and blowing agent 134 thereof undergoes further nucleation and growth in polymer 122 of foamed beads 142 to form polymer foam 152. Siloxane based copolymers and polycarbonate based copolymers enable a higher degree of saturation of blowing agent 134 and thus have increased nucleation during formation of cells to form polymer foam 152 with increased porosity and reduced density. The polymer foam may be micro-cellular, sub-microcellular, nano-cellular, or a hybrid of one or more of micro-cellular, sub-microcellular, or nano-cellular. In some implementations, method 800 further includes forming a second polymer foam and sintering the polymer foam and the second polymer foam together to form a single part. For example, multiple pieces of polymer foam 152 and/or molded parts 252 can be sintered together by application of heat and/or pressure by a mold. In some implementations, the multiple pieces of polymer foam 152 and/or molded parts 252 have different cell size. For example, in a particular implementation a micro-cellular polymer foam can be sintered together with a nano-cellular polymer foam to generate a hybrid foam. In other implementations, a sub-microcellular or nano-cellular foam can be sintered together with another type of foam having a different cell size to generate a hybrid foam. Additionally, or alternatively, post-processing operations can be performed on the polymer foam to generate additional cells or apertures therein.

Foamed beads 142, polymer foam 152 and/or molded part 252 can be manufactured in a continuous process or a batch process. In an exemplary continuous process, foamed beads 142, generated by a pressure vessel bead foaming process (e.g., an autoclave bead foaming process), are fed into a mold that applies steam to the foamed beads 142. During the application of heat and pressure to foamed beads 142, at least portion of foamed beads 142 reaches a temperature above its flow point and melts to sinter the foamed beads 142 together and produce a micro- or nano-cellular polymer bead foam.

In an exemplary batch process implementation, polymer 122 in solid form is immersed in blowing agent 134 under pressure for a period of time to form a fluid-saturated-polymer 122. Upon removal of pressure, the blowing agent 134 undergoes nucleation and growth to form the micro- or nano-cellular foam.

Method 800 may further include combining, at an extrusion device, the polymer and the additive to form a polymer composition. For example, the extrusion device may include or correspond to extruder 610. In some such implementations, method 800 also includes forming, by a granulator, the polymer composition into the pellets. For example, the granulator may include or correspond to die 618 and/or the granulator of FIG. 6.

Thus, method 800 describes manufacturing of a polymer foam, such as micro- and nano-cellular polymer foam 152 or molded part 252 having increased pore density (porosity) and reduced weight. Method 800 advantageously enables forming micro- and nano-cellular polymer foams with increased pore density and reduced weight.

One exemplary use of the polymer foam, such as polymer foam 152, is as thermal insulation (e.g., incorporated into thermal insulation material). The polymer foam has good insulation properties (e.g., lower than that of gasses) and low density. Nano-cellular polymer foam may provide the increased thermal insulation because of the Knudsen effect.

Another exemplary use of the polymer foam is as membranes and/or filters. Open cell micro- and nano-cellular polymer foams can be used as battery separators because they can hinder the transport of ions in narrow channels of the open cells. Surfaces of the polymer foam can be used to support catalysts and reactions due to the polymer foam's high surface area. Polymer foam (e.g., nano-cellular polymer foam) can be designed to filter specific particles based on tuning cell size to match a size of the particle being filtered.

The nano-cellular polymer foams described herein may have a higher impact resistance when compared to micro-cellular foams. The higher impact resistance can be caused by the confinement effect. In particular implementations, the nano-cellular polymer foam can exhibit transparency to a particular portion of electromagnetic radiation and/or have a high reflectance for a particular portion of electromagnetic radiation.

It is noted that one or more operations described with reference to one of the methods of FIGS. 7 and 8 may be combined with one or more operations of another of FIGS. 7 and 8. For example, one or more operations of method 700 may be combined with one or more operations of method 800. Additionally, one or more of the operations described with reference to the systems of FIGS. 1, 2, 5, and 6 may be combined with one or more operations described with reference to one of the methods of FIGS. 7 and 8.

### EXPERIMENTAL RESULTS

Micro-pellets of PC 175 and PC 669 were used to form micro and nano-cellular polymer foams. The micro-pellets used were prepared by using a Dr. Collin Teach-line ZK 25T extruder with an L/D ratio of 24 and screw diameter of 25 mm by using the extrusion conditions for each material given in Table 1.

| Table 1 | | | | |
|---|---|---|---|---|
| **Polymer** | **Temperature Profile. [degrees Celsius]** | **Screw Speed [RPM]** | **Hopper Speed [%]** | **Die Pressure [bar]** |
| PC 175 | 200-220-230-240-240 | 120 | 100 | 45 |
| PC 669 | 220-250-260-270-270 | 120 | 100 | 30 |

The temperature profile depicted in Table 1 includes five temperatures in degrees Celsius and corresponds to temperatures of "zones" of the extruder. The five zones (a.k.a., areas or portions) of the extruder correspond to a feed zone, a rear zone, a center zone, a front zone, and a nozzle zone of the extruder. The Dr. Collin Teach-line ZK 25T extruder, employing the extrusion conditions of Table 1, produced solid beads (also referred to as micro-pellets (e.g., 132, 232) having an average diameter of substantially 1 mm and an average length of substantially 1.3 mm.

A pressure vessel (e.g., 204, 524) was used to form foamed beads, such as foamed beads 142 or foamed beads 242, from the solid beads/micro-pellets of PC175 and PC 669 described above. The pressure vessel was configured to heat 0.6 liters of volume to 300 bar. The pressure vessel had an internal mixing system with a maximum RPM of 1000. The pressure vessel included a temperature controller with an accuracy of plus or minus 0.1 degrees Celsius. The pressure vessel had an exit valve to release pressure and an exit die which had an internal diameter to allow escape and expansion of saturated micro-pellets. The exit die was connected to a storage tank (e.g., a foamed bead collector) configured to store and/or receive hot liquid to induce post foaming in the foamed beads.

The following parameters were used, in conjunction with the above described equipment for a one step foaming process with the beads/micro-pellets of PC175 and PC 669. During stage 1 (e.g., 504), micro-pellets and a dispersion medium of water in a liquid state were mixed to form a homogeneous dispersion of the micro-pellets in the liquid dispersion medium. The homogeneous dispersion had a ratio of dispersion medium (e.g., water) to pellets of 22/1 (440 cc/20g) and included surfactants of calcium stearate, talc, sodium, C12- 14, and alkyl sulfate. During stage 2 (e.g., 508), the micro-pellets were saturated with a blowing agent of CO₂ and an RPM setting of 400 rpm was used to mix the contents of the pressure vessel during saturation. During stage 3 (e.g., 512), pressure was released from pressure. During stage 4 (e.g., 516), the collected saturated micro-pellets were heated in a water bath in the storage tank for 1 minute at substantially 100 degrees Celsius to induce post foaming and form foamed beads. During stage 5 (e.g., 520), the foamed beads were cooled by water at room temperature, substantially 23 degrees Celsius.

The one step foaming process described above produced foamed beads with a density of less than 200 kg/m³ and the foamed beads enable generates of bead foams having a density of less than 200 kg/m³.

In additional experiments, oil (e.g., sunflower oil, silicone oil, or low evaporation rate or energy oils) was substituted for water as the dispersion medium in the pressure vessel and the additional experiments produced foamed beads having increased homogeneity, as compared to foamed beads made with water as the dispersing medium. To illustrate, at some foaming conditions, water can evaporate too quickly and generate solid skins and/or cracks in the foamed beads. Specifically, more homogeneously foamed beads without a solid skin or with less of a solid skin as compared to foamed beads formed with water as a dispersion medium. The "solid skin" has a higher density than an interior of the foamed beads and may not have cells (e.g., micro- or nano, closed or open). The solid skin may impair sintering the foamed beads together, a second foaming process of the foamed beads, and properties (e.g., mechanical, thermal, optical, etc.) of foams made from the foams beads. The foamed beads produced with both water and oil had cell/pore sizes in the range of 2 to 25 microns. The foamed beads and foams made therefrom had relative densities of 0.15.

In the above experiments, it was found that saturation of CO₂ induce a crystallization effect which hinders the foaming process and increases density of the foamed beads. Thus, oversaturation produces foamed beads and foams with higher densities and there is a particular pressure-time range for each (co)polymer that enables low densities. Increasing saturation pressure or saturation time beyond this particular range increases density rather than decreases density.

The above specification and examples provide a complete description of the structure and use of illustrative implementations. Although certain implementations have been described above with a certain degree of particularity, or with reference to one or more individual implementations, those skilled in the art could make numerous alterations to the disclosed implementations without departing from the scope of this disclosure. As such, the various illustrative implementations of the methods and systems are not intended to be limited to the particular forms disclosed. Rather, they include all modifications and alternatives falling within the scope of the claims, and implementations other than the one shown may include some or all of the features of the depicted implementations. For example, elements may be omitted or combined as a unitary structure, connections may be substituted, or both. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one implementation or may relate to several implementations. Accordingly, no single implementation described herein should be construed as limiting and implementations of the disclosure may be suitably combined without departing from the teachings of the disclosure.

The claims are not intended to include, and should not be interpreted to include, means-plus- or step-plus-function limitations, unless such a limitation is explicitly recited in a given claim using the phrase(s) "means for" or "step for," respectively.

## Claims

1. A polymer foam comprising:
a siloxane based copolymer,
wherein the polymer foam has a density of less than or equal to 300 kg/m³.

2. The polymer foam of claim 1, wherein the polymer foam comprises a bead foam, and wherein the polymer foam has an average pore size of 10 nm to 20 microns, a relative density of between 0.15 and 0.3, or both.

3. The polymer foam of any of claims 1 and 2, wherein the polymer foam comprises a nano-cellular polymer foam and has a cell density of greater than or equal to 10E15 cells per cubic centimeter and an average cell size of 10 nm to 500 nm.

4. The polymer foam of any of claims 1 and 2, wherein the polymer foam comprises a sub-micron cellular polymer foam and has a cell density between 10E12 and 10E15 cells per cubic centimeter and an average cell size of 0.5 microns to 1 micron.

5. The polymer foam of any of claims 1 and 2, wherein the polymer foam comprises a micro-cellular polymer foam and has a cell density between 10E9 and 10E15 cells per cubic centimeter and an average cell size of 1 micron to 20 microns.

6. The polymer foam of any of claims 1-5, wherein the siloxane based copolymer includes siloxane between 0.1 and 25 weight percent, and wherein the siloxane based copolymer includes a polycarbonate-siloxane copolymer, a polyphenylene ether-siloxane copolymer, a polyetherimide-siloxane copolymer, or a combination thereof.

7. The polymer foam of claim 6, wherein the polycarbonate-siloxane copolymer includes a polysiloxane block copolymer comprising a first block and a second block, the first block comprises a polysiloxane block, the second block comprises a polycarbonate or a polycarbonate blend, the second block does not contain a polysiloxane, and the polysiloxane block has 5 to 90 repeat units.

8. The polymer foam of any of claims 1-7, wherein, the polymer foam has a density of less than 200 kg/m³, wherein cells of the polymer foam comprise an open cell structure, a closed cell structure, or a combination thereof, and wherein the polymer foam is made using a solid-state process or a bead foaming process.

9. A method of forming polymer bead foam, the method comprising:
saturating pellets with a blowing agent to form saturated pellets, the pellets including a siloxane based copolymer; and
forming foamed beads based on the saturated pellets, the foamed beads have a density of less than 300 kg/m³.

10. The method of claim 9, wherein saturating the pellets comprises:
combining, at a pressure vessel, the pellets, one or more additives, and the blowing agent to form a mixture; and
applying, by the pressure vessel, heat, pressure, or both, to the mixture to form the saturated pellets, and
wherein forming the foamed beads comprises depressurizing the saturated pellets and heat treating the saturated pellets in a hot liquid bath, wherein, during forming the foamed beads, the blowing agent induces nucleation and expansion in the saturated pellets to form the foamed beads.

11. The method of claim 10, wherein, for micro-cellular polymer foam formation, saturating the pellets is performed at a temperature higher than a glass transition temperature (Tg) of the siloxane based copolymer or a melting temperature (Tm) of the siloxane based copolymer.

12. The method of claim 10, wherein, for nano-cellular polymer foam formation, saturating the pellets is performed at a temperature lower than a glass transition temperature (Tg) of the siloxane based copolymer when the siloxane based copolymer is amorphous, or at a temperature lower than a melting temperature (Tm) when the siloxane based copolymer is semi-crystalline.

13. The method of claim 10, wherein the blowing agent comprises carbon dioxide, wherein oil is used as a dispersion medium in the pressure vessel, and wherein the foamed beads are homogeneous, have cell sizes between 10 nanometers and 20 microns, and do not have a solid skin.

14. The method of claim 9, further comprising:
combining, at an extrusion device, a siloxane based resin and one or more additives to form a siloxane based copolymer composition; and
forming, by a granulator, the siloxane based copolymer composition into the pellets, wherein the pellets have an average length of between 0.8 and 1.2 mm and an average diameter of between 1 and 1.6 mm.

15. A polymer foam formed by the method of any of claims 9-14.
